# EUROPÄISCHE PATENTSCHRIFT

(11) **EP 2 116 737 B1**
(45) Veröffentlichungstag und Bekanntmachung des Hinweises auf die Patenterteilung: **31.08.2011**
(21) Anmeldenummer: 09006111.0
(22) Anmeldetag: 05.05.2009
(51) Int. Cl.: F16D 65/56

(54) **Radbremse mit einer Nachstellvorrichtung**
Wheel brake with slack adjusting device
Frein de roue avec dispositif de rattrapage

(30) Priorität: 05.05.2008 DE 202008006156 U
(43) Veröffentlichungstag der Anmeldung: 11.11.2009
(73) Patentinhaber: AL-KO Kober AG, 89359 Kötz (DE)
(72) Erfinder: Bestler, Wolfgang, 89343 Schönenberg (DE); Glinka, Oliver, 89081 Ulm (DE); Mairle, Josef, 89359 Kötz (DE); Müller, Jürgen H., 89312 Günzburg (DE)
(74) Vertreter: Ernicke, Klaus Stefan

(56) Entgegenhaltungen:
- DE-A1-102006 007 525
- GB-A- 1 011 465
- GB-A- 2 090 635
- US-A- 5 193 653

## Beschreibung

Die Erfindung betrifft eine Radbremse mit den Merkmalen im Oberbegriff des Hauptanspruchs.

Eine solche Radbremse ist aus der DE 20 2006 002 580 U1 bekannt. Sie besitzt eine Bremstrommel, zwei Bremsbacken, eine Abstützung für die Bremsbacken, eine Spreizeinrichtung und eine im Bereich der Spreizeinrichtung angeordnete Nachstelleinrichtung, welche Bremsverschleiss kompensiert. Die Nachstelleinrichtung hat ein Stellteil und ein Nachstellorgan, die bei einer Bremsbetätigung relativ zueinander bewegbar sind, wobei im Verschleissfall das Stellteil die Stützbreite zwischen den Bremsbacken vergrößert. Die Nachstelleinrichtung hat eine Löseeinrichtung, die bei einem vergrößerten Bremsbetätigungshub den Eingriff von Stellteil und Nachstellorgan löst. Das Nachstellorgan und die Spreizeinrichtung sind durch einen mehrseitigen Formschluss miteinander verbunden.

Eine andere Innenbackenbremse mit Nachstelleinrichtung ist aus der EP 0 482 430 B1 bekannt. Um ein unerwünschtes verstellen der Nachtelleinrichtung bei einem vergrößerten Bremsbetätigungshub zu vermeiden, ist die Nachstelleinrichtung mittels eines stabförmigen Verbindungsglieds mit einer ausweichfähig gelagerten Bremsbacke verbunden, wobei diese Verbindung bei der Rückwärtsfahrt und bei einem Ausweichen der Bremsbacke gelöst werden kann.

Es ist Aufgabe der vorliegenden Erfindung, eine Radbremse mit einer verbesserten Nachstelleinrichtung aufzuzeigen.

Die Erfindung löst diese Aufgabe mit den Merkmalen im Hauptanspruch.
Die beanspruchte einseitige Mitnahmeverbindung, vorzugsweise Schleppverbindung, zwischen der Nachstell-und Spreizeinrichtung hat den Vorteil, dass sich eine bessere Kinematik ergibt. Die Mitnahmeverbindung besteht bevorzugt beim Betätigen oder Anziehen der Radbremse, wohingegen bei deren Lüften die Spreizeinrichtung sich von der Nachstelleinrichtung lösen kann. Etwaige Blockadestellungen können verhindert werden. Sollte die Nachstelleinrichtung aus irgendeinem Grund in ihrer Nachstellposition blockiert sein, können hiervon unabhängig die Spreizeinrichtung und damit die Bremsbacken beim Lüften oder Entlasten der Bremse in ihre Ausgangsposition zurückkehren. Ein Heißlaufen der Radbremse (2) durch Anlage der Bremsbacken an der Bremstrommel wird vermieden.

Bei Anziehen der Spreizeinrichtung und der Bremsen betätigt die Spreizeinrichtung die Nächstelleinrichtung auf direktem oder indirektem Wege. Nach Lösen der Bremsbetätigung kann das Rückstellorgan der Nachstelleinrichtung wirksam werden und die Nachstelleinrichtung in die Ruhestellung zurückbewegen und dabei ggf. auch die Spreizeinrichtung mitnehmen. Die Bremse und die Nachstelleinrichtung werden dadurch besser und sicherer gelöst. Das Rückstellorgan hält außerdem im normalen Betrieb die Spreizeinrichtung und die Nachstelleinrichtung in Kontakt.

Die beanspruchte Ausgestaltung der Nachstelleinrichtung hat den Vorteil, dass sie sich für beliebige Radbremsen, z.B. mit Schwenkbacken und/oder Schiebebacken, und für beliebige Ausführungen einer Rückfahrautomatik eignet. Die mit der Nachstelleinrichtung versehene Spreizeinrichtung kann auch bei Radbremsen ohne Rückfahrautomatik vorgesehen sein und ermöglicht deren späteres Nachrüsten. Ferner lassen sich auch vorhandene Radbremsen mit der Nachstelleinrichtung nachrüsten.

Von besonderem vorteil sind die hohe Betriebssicherheit der Nachstelleinrichtung sowie der geringe Bau- und Platzaufwand. Die Spreizeinrichtung mit der Nachstelleinrichtung hat im wesentlichen die gleiche Baugröße und die gleichen Anschlüsse wie eine konventionelle Spreizeinrichtung. Dies erlaubt eine Standardisierung der Radbremse. Eine spezielle Adaption der anderen Radbremsteile, insbesondere der Bremsbacken, ist nicht erforderlich. Günstig wirken sich ferner die mechanische Robustheit der beanspruchten Nachstelleinrichtung sowie ihre einfache Bedienbarkeit aus.

Die Löseeinrichtung ist integraler Bestandteil der Nachstelleinrichtung und wirkt intern, indem bei Bedarf der Eingriff der Einrichtungsteile gelöst wird. Diese Technik ist wenig toleranz- und fehleranfällig und bietet eine hohe Betriebs- und Funktionssicherheit.

Die Löseeinrichtung kann bei Auftreten eines vergrößerten Bremshubs aktiv werden, der nur temporär auftritt und reversibel ist, wobei die Ursache für die Bremshubvergrößerung gleichgültig ist. Hierdurch kann sowohl auf eine Bremshubvergrößerung bei Rückwärtsfahrt und ausweichenden Bremselementen, als auch bei verschleißmäßig oder thermisch bedingten oder aus anderen Gründen vorhandenen anormalen Hubvergrößerungen reagiert werden. Die Aktivierung kann vom Bremshub direkt abhängig sein und insbesondere bei Überschreiten einer vorgebenen Hubgröße oder Schaltschwelle erfolgen. Die Hubgröße ist vorzugsweise der Auslöser. Die Löseeinrichtung kann dadurch ursachenneutral reagieren und zuverlässig verhindern, dass in solchen Fällen eine unerwünschte Bremsnachstellung erfolgt. Die Nachstelleinrichtung kann zwischen Normalbetrieb der Bremse und ungewöhnlichen Betriebsbedingungen unterscheiden, so dass ein Nachstellen der Bremse zur Kompensation des normalen Bremsverschleisses geschieht

Vorteilhaft ist außerdem, dass die Nachstelleinrichtung als Einstellmechanismus für die Radbremse benutzt werden kann.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht einer geöffneten Radbremse bei abgenommener Bremstrommel,
- Figur 2:: eine Draufsicht auf die Radbremse von Figur 1 gemäß Pfeil II nebst angedeuteter Bremstrommel und Fahrzeugrad,
- Figur 3 bis 5:: verschiedene, zum Teil perspektivische Ansichten der Spreizeinrichtung mit der Nachstelleinrichtung und der Löseeinrichtung,
- Figur 6:: eine Variante einer Radbremse mit Schiebebacke und Nachstell- sowie Löseeinrichtung,
- Figur 7 und 8:: einen Fahrzeuganhänger mit Radbremsen und einer Auflaufbremseinrichtung in Seitenansicht und Draufsicht und
- Figur 9 und 10:: eine Variante der Spreizeinrichtung mit der Nachstelleinrichtung und der Löseeinrichtung in verschiedenen Ansichten.

Die Erfindung betrifft eine Radbremse (2) für Fahrzeugräder (1) und ein damit ausgerüstetes Fahrzeug (50). Die Radbremse (2) kann in der Grundkonstruktion entsprechend der DE 20 2006 002 580 U1 ausgebildet sein.

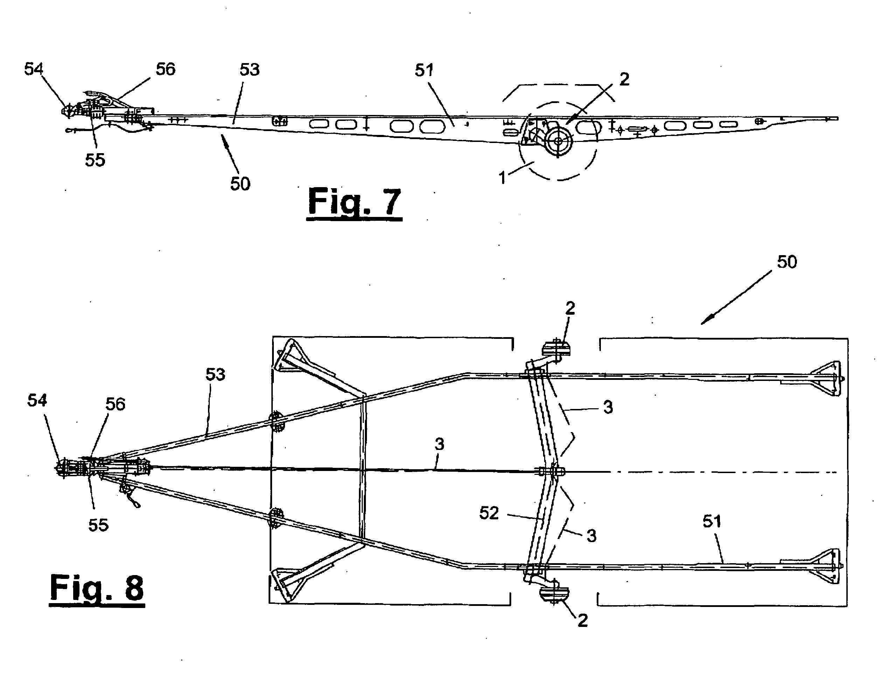

Bei dem Fahrzeug (50) handelt es sich z.B. um den in Figur 7 und 8 gezeigten Fahrzeuganhänger mit einem Fahrgestell (51), mit ein oder mehreren Achsen (52) und mit einer starren oder beweglichen zugdeichsel (53), an der eine Anhängerkupplung (54) und eine Auflaufbremseinrichtung (55) sowie eine ggf. mit einem Federspeicher ausgestattete Handbremseinrichtung (56) angeordnet sind. Von den Bremseinrichtungen (55,56) werden die Bremskräfte mittels eines Bremsbetätigungsorgans (3), z.B. eines Bremsgestänges und/oder eines Seilzugs auf die Radbremsen (2) übertragen.

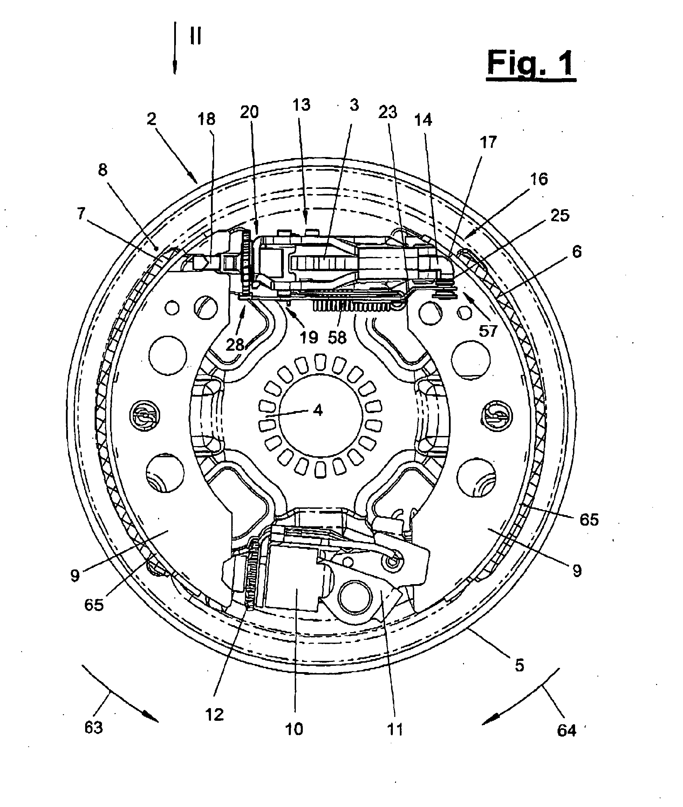

Die Radbremse (2) ist in den beiden gezeigten Ausführungsbeispielen von Figur 1 und 2 sowie Figur 6 jeweils als Trommelbremse ausgebildet und besteht aus ein oder mehreren Bremsbacken (6,7), die innerhalb der Bremstrommel (5) angeordnet sind und mittels einer Spreizeinrichtung (13) unter Einwirkung des Betätigungsorgans (3) gegen die Rückstellkraft von nicht dargestellten Bremsenfedern gespannt oder gelöst werden.

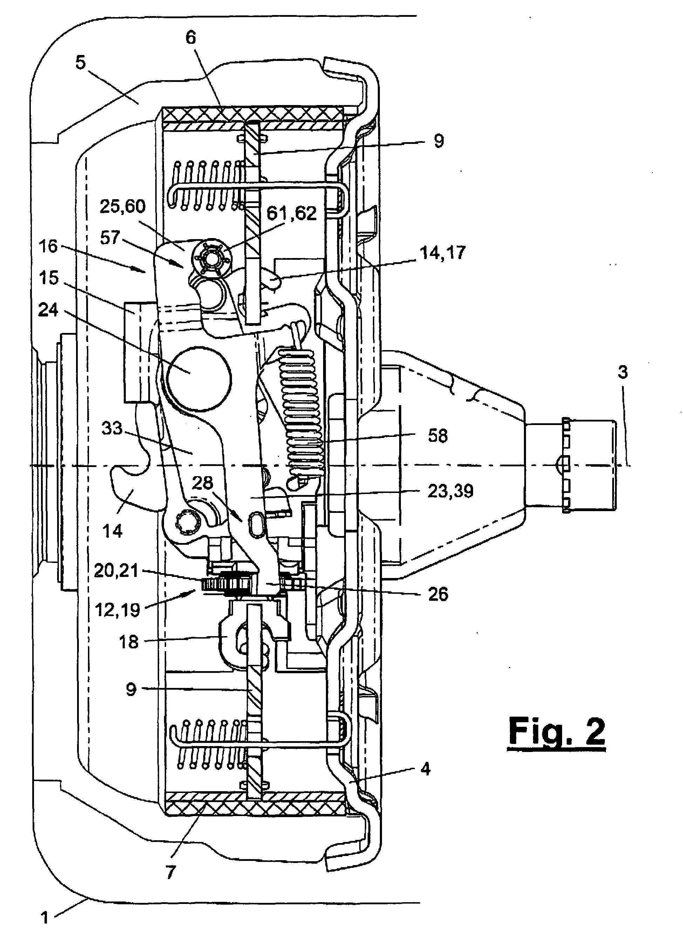

Die Bremsbacken (6,7) sind in der Variante von Figur 1 und 2 beide als Schwenkbacken ausgebildet und bestehen z.B. aus einem konzentrisch zur Radnabe gebogenen Belagträger (65) mit dem schraffiert dargestellten Bremsbelag und einem damit fest verbundenen, quer abstehenden Steg (9). Die Bremsbacken (6,7) sind in der Radbremse (2) zwischen einem rückseitigen Bremsschild (4) und der Bremstrommel (5) angeordnet und werden durch Federn am Bremsschild (4) in führender Anlage gehalten. An der Bremstrommel (5) wird das Fahrzeugrad (1) in geeigneter Weise befestigt.

Zwischen den Bremsbacken (6,7) und deren Stegen (9) ist am einen Ende die schwimmend gelagerte Spreizeinrichtung (13) angeordnet. Am anderen Ende ist eine mit dem Bremsschild (4) verbundene Abstützung (10) vorhanden, welche die Backenenden miteinander verbindet und im normalen Bremsbetrieb ortsfest abstützt. Figur 1, und 2 sowie Figur 6 verdeutlichen diese Ausgestaltung.

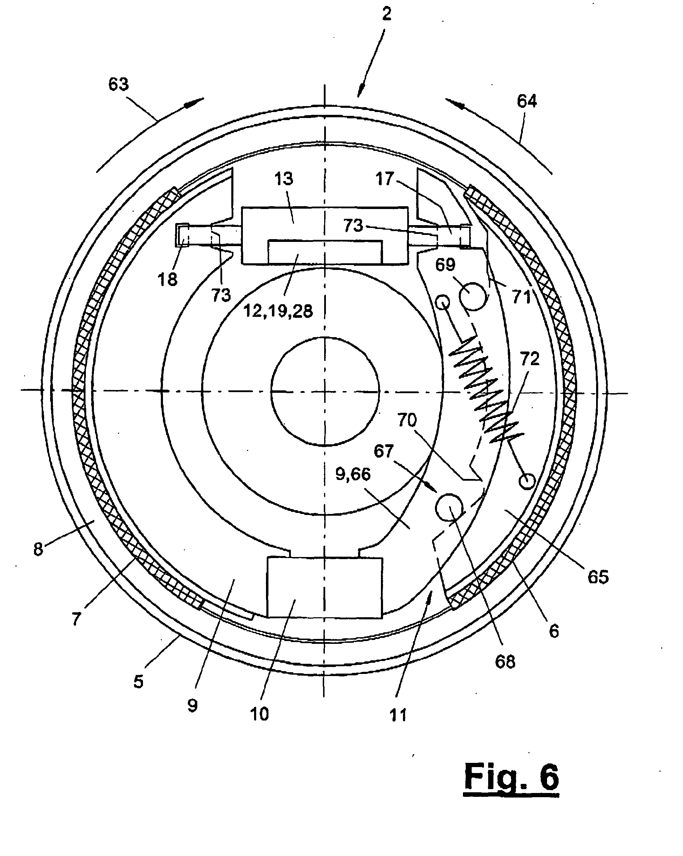

Figur 6 zeigt eine Variante der Radbremse (2), bei der die eine Bremsbacke (7) als Schwenkbacke und die andere Bremsbacke (6) als Schiebebacke ausgebildet sind. Die Schwenkbacke (7) kann wie in der ersten Ausführungsform von Figur 1 bis 5 ausgebildet sein. Bei der Schiebebacke (6) ist der Steg (9) als Backenschuh (66) ausgebildet, der am einen Ende an der Abstützung (10) gelenkig abgestützt ist und am anderen Ende mit der Spreizeinrichtung (13) verbunden ist. Auf dem Backenschuh (66) ist ein Belagträger (65) beweglich und insbesondere in Umfangsrichtung sowie quer dazu verschieblich gehalten, wobei der Zusammenhalt durch eine Feder (72) gesichert ist.

Zwischen dem Backenschuh (66) und dem Belagträger (65) besteht eine Gleitführung (67) mit Stützelementen (68,69) und Führungselementen (70,71), die in beliebig geeigneter Weise ausgebildet sein können. Die Stützelemente (68,69) sind z.B. als zylindrische Stützbolzen ausgebildet und am Backenschuh (66) angeordnet. Die Führungselemente (70,71) sind am Belagträger (65) angeordnet und als Ausnehmungen am inneren Rand seines Trägerstegs ausgebildet. Die Ausnehmungen (70,71) haben am einen Ende einen der Stützbolzenkontur angepassten runden Abschnitt, an den sich der zugehörige Stützbolzen (68,69) in der Anschlagstellung formschlüssig anlegen und abstützen kann. Der zweite anschließende Abschnitt der Ausnehmungen (70,71) ist als gerade oder leicht gewölbte Führungsbahn ausgebildet, an der der zugehörige Stützbolzen (68,69) entlang gleiten kann.

Die Radbremse (2) kann mit einer Rückfahrautomatik (11) versehen sein, welche bei Rückwärtsfahrt des Fahrzeugrads (1) die Bremswirkung mindert oder aufhebt, wobei zumindest eine Bremsbacke (6,7) außer Eingriff mit der Bremstrommel (5) gebracht wird. Figur 1 und 6 geben die Drehrichtung (64) für Vorwärtsfahrt und die Drehrichtung (63) für Rückwärtsfahrt mit Pfeilen an.

Die Rückfahrautomatik (11) kann in verschiedener Weise ausgebildet und angeordnet sein. In der gezeigten Ausführungsform von Figur 1 und 2 ist sie entsprechend der EP 0 261 660 A1 oder der DE 20 2006 002 580 U1 ausgebildet und besteht aus einem Stützglied und mindestens einem bei Rückwärtsfahrt ausweichenden Nocken. Dies ermöglicht bei Rückwärtsfahrt eine gegenseitige Annäherung der Bremsbackenenden und eine Aufhebung der Bremswirkung.

Alternativ kann die Rückfahrautomatik wie in der Variante von Figur 6 ausgebildet sein und bei Rückwärtsfahrt ein Ausweichen eines Belagträgers (65) der einen Bremsbacke (6) gegenüber seinem Stützsteg oder Backenschuh (66) erlauben. Die Konstruktion kann ähnlich wie in der EP 0 482 430 B1 oder der DE 22 48 061 A1 ausgeführt sein.

Bei der Variante von Figur 6 kann sich der Belagträger (65) auf dem Backenschuh (66) in Umfangsrichtung der Bremstrommel (5) bewegen. Beim Bremsen in Vorwärtsfahrt ist die Schiebebacke (6) die auflaufende Bremsbacke. Der Belagträger (65) wird von der Bremstrommel (5) in Drehrichtung (64) mitgenommen und stützt sich dabei über seine Ausnehmung (71) am oberen Stützbolzen (69) ab. Bei Betätigung des Spreizelements (13) werden beide Bremsbacken (6,7) gespreizt und entfalten ihre volle Bremswirkung. Bei einem Bremsen in Rückwärtsfahrt ist die Schiebebacke (6) die ablaufende Backe, wobei der Belagträger (65) von der Bremstrommel (5) in Rückwärtsdrehrichtung (63) gegen die Rückholkraft der Feder (72) in Umfangsrichtung mitgenommen wird und dadurch mit seiner unteren Ausnehmung (70) am unteren Stützbolzen (68) zur Abstützung (10) hin gleitet. Hierbei führt der Belagträger (65) durch eine entsprechende Neigung der Ausnehmung (71) eine nach innen gerichtete Bewegung aus und löst sich im unteren Bereich von der Bremstrommel (5). Die Schiebebacke (6) verliert dadurch ihre Bremswirkung, was sich durch die schwimmende Lagerung der Spreizeinrichtung (13) auch auf eine Verringerung der Bremswirkung der anderen Schwenkbacke (7) auswirkt.

In einer Ausführungsform gemäß Figur 1 kann an der Abstützung (10) ein Einstellmechanismus (12) angeordnet sein, der ein Nachstellzahnrad mit einem Gewindestößel aufweist, wobei das Nachstellzahnrad durch eine Öffnung im Bremsschild (4) von außen her zugänglich ist und bei montierter Radbremse (2) eine Nachstellung ermöglicht. Über den Einstellmechanismus (12) kann die Stützweite der Abstützung (10) verändert werden. Dies ermöglicht eine Einstellung und Justierung der Bremsbacken (6,7) und ihrer Bremsluft in Lösestellung. Figur 1 und 6 zeigen diese Bremsluft (8) zwischen Bremsbacken (6,7) und Bremstrommel (5). Bei der Bremsenvariante von Figur 6 ist eine ortsfeste Abstützung (10) ohne Einstellmechanismus (12) vorgesehen. Alternativ kann auch hier ein solcher Einstellmechanismus (12) vorhanden sein.

Die Spreizeinrichtung (13) ist mit einer Nachstelleinrichtung (19) versehen, mit welcher der Verschleiß der Bremsbeläge automatisch kompensiert werden kann. Mit zunehmenden Verschleiß wird der zum Anlegen der Bremsbacken (6,7) an der Bremstrommel (5) erforderliche Zuspannweg oder Spreizweg größer. Mit der Nachstelleinrichtung (19) wird diese Wegvergrößerung kompensiert.

Alternativ zur vorerwähnten Ausführungsform kann der Einstellmechanismus (12) an der Zuspannseite angeordnet und mit der Nachstelleinrichtung (19) kombiniert sein. Die Abstützung (10) der Bremsbacken (6,7) kann entsprechend unterschiedlich ausgebildet sein. In der Variante von Figur 2 bis 5 entfällt die Nachstelleinrichtung (12), wobei die eine Bremsbacke (7) direkt an der Abstützung (10) angelenkt ist und die andere Bremsbacke (6) über die Schwenkmechanik der Rückfahrautomatik (11) eine Abstützung erhält. In der Variante von Figur 6 mit der kombinierten Schwenk- und Schiebebacke ist die Abstützung (10) ohnehin als stationäres und kompaktes Element ausgebildet, welches keine zusätzliche Einstellfunktion hat und an dem die Schwenkbacke (7) und der Backenschuh (66) in direkter Anlage schwenkbar abgestützt sind.

Die Nachstelleinrichtung (19) ist außerdem mit einer Löseeinrichtung (28) versehen, welche bei einem vergrößerten und anormalen Bremsbetätigungshub die Nachstelleinrichtung (19) außer Kraft setzt. Die Löseeinrichtung (28) wird z.B. durch das Auftreten des vergrößerten Bremsbetätigungshubs und ggf. in Abhängigkeit von der Größe der Hubzunahme aktiviert. Ein solcher vergrößerter Hub am Bremsbetätigungsorgan (3) entsteht z.B. bei der vorerwähnten Rückwärtsfahrt in Drehrichtung (63) unter der Einwirkung einer Rückfahrautomatik (11). Die eine oder mehreren ausweichenden Bremsbacke(n) (6,7) ermöglichen eine Vergrößerung des Spreizwegs an der Spreizeinrichtung (13). Ohne Löseeinrichtung (28) würde diese Wegvergrößerung als Verschleiß von der Nachstelleinrichtung (19) fehlinterpretiert werden und zu einer irreversiblen Spreizwegnachstellung führen. Daneben sind auch andere Ursachen für eine Hubvergrößerung möglich, z.B. thermisch bedingte temporäre und reversible Dehnungen oder dgl.

Die Nachstelleinrichtung (19) besitzt ein Stellteil (20) und ein Nachstellorgan (23), die bei der Bremsbetätigung unter Einwirkung des Betätigungsorgans (3) relativ zueinander bewegt werden. Mit der Löseeinrichtung (28) wird bei Auftreten eines vergrößerten Bremsbetätigungshubs und z.B. bei Überschreiten einer vorgegebenen Hubgröße oder Schaltschwelle der Nachstelleingriff von Stellteil (20) und Nachstellorgan (23) gelöst, so dass keine Nachstellung erfolgt. Die Bremsbacken (6,7) können nach Beendigung der Rückwärtsfahrt und erneuter Vorwärtsfahrbewegung wieder in ihre Ausgangsposition für einen normalen Brems- und Nachstellbetrieb zurückkehren.

Die Spreizeinrichtung (13) kann in beliebig geeigneter Weise ausgebildet sein und ist z.B. als ein Spannschloss gestaltet, welches von einem Bremsseil bzw. einem Bowdenzug (3) betätigt wird. Die Spreizeinrichtung (13) besitzt ein Spreizelement (14), welches im Falle eines Spannschlosses als Spannhebel ausgebildet ist, der mittels einer Schwenkachse (32) an einem z.B. gabelförmigen Gehäuse (15) drehbar gelagert und mit dem Betätigungsorgan (3) verbunden ist. Der Spannhebel (14) hat am einen Hebelende (16) eine gabelförmige Backenaufnahme (17), die mit ihrem Gabelschlitz formschlüssig über einen frei gelegten Quersteg (73) am Ende des Bremsbackenstegs (9) der einen Bremsbacke (6) greift.

Am Gehäuse (15) ist an dem der anderen Bremsbacke (7) zugekehrten Ende das Stellteil (20) angeordnet, welches mittels einer Backenaufnahme (18), z.B. einer Gabel, in Eingriff mit einem Quersteg (73) am Ende des Bremsbackenstegs (9) der anderen Bremsbacke (7) steht. Die Hebelübersetzung des Spannhebels (14) ist so gewählt, dass beim Anziehen des Betätigungsorgans (3) der Abstand zwischen den Backenaufnahme (17,18) und der hierdurch gebildete Spreizweg vergrößert wird. Die beiden Gabeln (17,18) wirken beidseitig wie Greifhaken, wobei sie die Bremsbacken (6,7) beim zuspannen wegschieben und beim Lüften der Radbremse (2) zurückziehen. Alternativ können die Backenaufnahmen (17,18) in beliebig anderer Weise ausgebildet sein, z.B. entsprechend der DE 20 2006 002 580 U1.

Das Stellteil (20) kann in beliebig geeigneter Weise ausgebildet sein. Im gezeigten Ausführungsbeispiel besteht es aus einem Stirnzahnrad (21), welches um eine in Spreizrichtung liegende Achse drehbar am Gehäuse (15) gelagert und mit einem Gewindestößel (22) verbunden ist. Der Gewindestößel (22) trägt an seinem vorderen freien Ende das erwähnte Gabelstück (18) und ist über ein Gegengewinde im Zahnrad (21) oder an anderer geeigneter Stelle gelagert. Eine Drehung des Zahnrades (21) bewirkt dadurch eine Längsverstellung des Gewindestößels (22) und der Backenaufnahme (18).

Wenn die Nachstelleinrichtung (19) die Funktion der Einstelleinrichtung (12) für die Radbremse (2) übernimmt, ist das Stellteil (20) bzw. das Zahnrad (21) bei montierter Radbremse (2) von außen für Einstellt und Nachstellarbeiten zugänglich. Hierzu kann der Bremsschild (4) eine Zugangsöffnung (nicht darstellt) aufweisen.

Das Nachstellorgan (23) der Nachstelleinrichtung (19) ist z.B. als einteiliger oder mehrteiliger Nachstellhebel ausgebildet, der um eine Schwenkachse (24) drehbar am Gehäuse (15) gelagert ist. In den Zeichnungen von Figur 1 bis 6 ist ein einteiliger Nachstellhebel (23) dargestellt. Alternativ kann der Nachstellhebel (23) mehrteilig und wie in der Ausführungsform von Figur 12 bis 17 der DE 20 2006 002 580 U1 ausgebildet und mit einer anderen Nockenform sowie einer Kulissenführung kombiniert sein.

Der Nachstellhebel (23) besitzt in den gezeigten Ausführungsformen einen einteiligen und abgewinkelten Hebelarm (39). Er ist an seinem rückwärtigen Ende (16) über eine einseitig wirksame Mitnahmeverbindung (57), vorzugsweise eine Schleppverbindung, mit der Bremsbetätigung verbunden. Beim Anziehen der Radbremse (2) bewirkt eine Drehung des Spannhebels (14) eine gleichsinnige Drehung des Nachstellhebels (23). Bei Entlastung der Radbremse (2) wird der Nachstellhebel (23) durch ein Rückstellorgan (58) in die Ruheposition bewegt und kann dabei ggf. den Spannhebel (14) mitnehmen. Das Rückstellorgan (58) kann die Rückstellwirkung der Federn zwischen den Bremsbacken unterstützen.

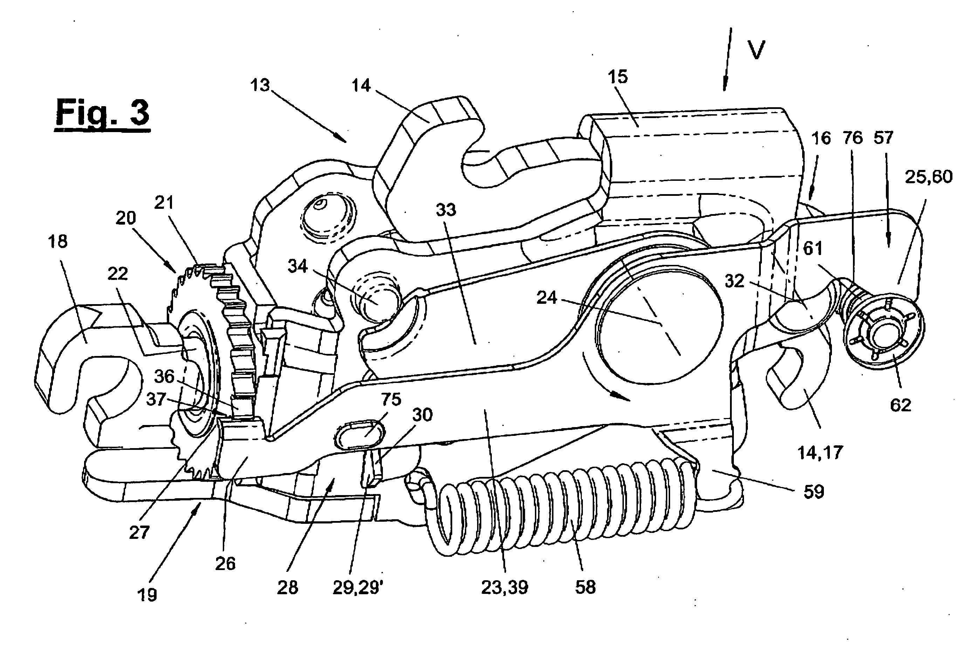

Figur 3 bis 5 zeigen die Ausbildung einer ersten Variante der Mitnahme- oder Schleppverbindung (57) in einer vergrößerten Darstellung. Die Schleppverbindung (57) wirkt einseitig, wobei das Rückstellorgan (58) den Eingriff zwischen dem Nachstellhebel (23) bzw. seinem Hebelarm (39) und dem Spreizelement (14) unterstützt und sichert. Der Hebelarm (39) hat am hinteren Hebelende (16) eine vorspringende Nase (60), die eine Schleppnase bildet und mit einem Anschlag (61) am Spannhebel (14) in Kontakt tritt. Die Schleppnase (60) greift über und hinter den Anschlag (61) und weist im Kontaktbereich eine schräge Angleitfiläche (76) auf, die vom freien Nasenende zur Achse (24) hin ansteigt und deren Lage aus Figur 3 ersichtlich ist. Sie sichert den Eingriff der Schleppnase (60) und des Anschlags (61) bei deren Drehung um ihre seitlich versetzten Achsen (24,32).

Der Anschlag (61) steht quer vom Spannhebel (14) ab und ist z.B. als zylindrischer Bolzen (61) ausgebildet, der an der schrägen Angleitfläche entlang wandern kann. Der Bolzen (61) kann als drehbare Rolle ausgeführt sein. Dies ist zur Verringerung der Reibung zwischen den beiden Bauteilen und zur Verhinderung von Verspannungen günstig. Der Bolzen (61) weist außerdem eine Führung (62) auf. Diese kann aus einer Manteleinschnürung des Bolzens (61) und aus einer Sicherungsscheibe am freien Bolzenende bestehen. Die Führung (62) sichert den Eingriff der Schleppnase (60). Der Bolzen (61) ist an einem rückwärtigen Ansatz des Spannhebels (14) angeordnet, der hinter der Achse (32) liegt. Der Bolzen (61) befindet sich oberhalb der benachbarten Backenaufnahme (17) und drückt bei Bremsentlastung unter der Wirkung des Rückstellorgans (58) den Spannhebel (14) gegen die Bremsbacke (6) und unterstützt deren einwärts gerichtete Lösebewegung.

Das Rückstellorgan (58) kann in beliebig geeigneter Weise ausgebildet sein. Im gezeigten Ausführungsbeispiel ist es eine Zugfeder, insbesondere eine Schraubenfeder, die zwischen einem nach unten vorstehenden Ansatz (59) am Hebelarm (39) und einem relativ ortsfesten Teil der Radbremse (2), z.B. dem Gehäuse (15) oder einem Teil des Bremsschilds (4) eingehängt ist. Der Ansatz (59) befindet sich unterhalb des Gelenks (24). Die Feder (58) hat eine zum vorderen Teil des Hebelarms (39) im wesentlichen parallele Ausrichtung.

Am vorderen Armende hat der Nachstellhebel (23) eine mehrfach abgewinkelte Stellnase (26), welche mit einer Vorderkante (27) in Eingriff mit dem Stellteil (20) und insbesondere dem Zahnrad (21) tritt. Der Hebelarm (39) kann im Bereich zwischen der Schwenkachse (24) und der Stellnase (26) eine abgewinkelte Form haben. Der Hebelarm (39) besteht aus einem flachen Blechteil, dessen Hauptebene im wesentlichen parallel zur benachbarten Oberfläche des Gehäuses (15) ausgerichtet ist und sich quer zur Schwenkachse (24) erstreckt. Durch diese Gestaltung hat der Nachstellhebel (23) eine Biegeelastizität, welche für die nachfolgend erläuterte Löseeinrichtung (28) bedeutsam ist und ein Lösen des Eingriffs mit dem Zahnrad (21) durch elastische Verformung des Hebelarms (39) ermöglicht.

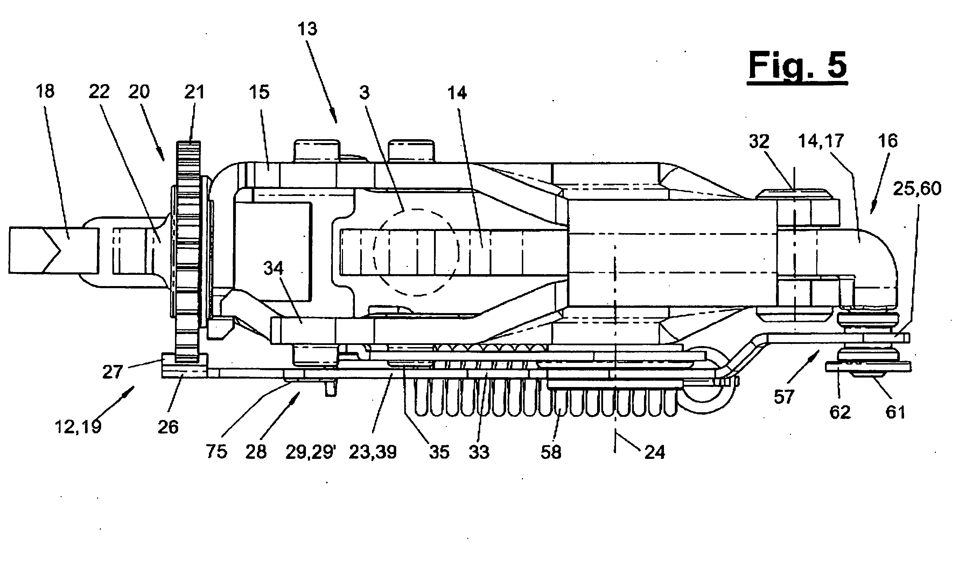

Figur 3 und 5 verdeutlichen den Eingriff des Nachstellorgans (23) und des Stellteils (20) im normalen Bremsbetrieb. Die zum Zahnrad (21) hin zweifach abgewinkelte Stellnase (26) greift bei entspannter Spreizeinrichtung (23) in den Zwischenraum (37) zwischen zwei Zähnen (36) des Zahnrads (21). Die Hebelauslegung und die Zahnradgeometrie sind derart aufeinander abgestimmt, dass im normalen Bremsbetrieb und mit den dabei auftretenden Spreizwegen die Vorderkante (27) sich in diesem Freiraum oder zahnspiel (37) hin und her bewegt und keine Drehung des Zahnrads (21) auslöst. Die Zähne (36) können eine Neigung in Stellrichtung haben, welche dieses betätigungsfreie Hebelspiel unterstützt. Wenn Verschleiß auftritt und der Spreizweg entsprechend größer wird, vergrößert sich auch der Schwenkweg des Nachstellhebels (23), wobei die Vorderkante (27) über den benachbarten Zahn (36) gleitet und in die nächstfolgende Ausnehmung (37) taucht. Die Stellnase (26) wird hierbei z.B. in der in Figur 3 durch einen Richtungspfeil gekennzeichneten Weise gegen den Uhrzeigersinn gedreht. Beim Entspannen der Radbremse (2) und einem zurückdrehen des Nachstellhebels (23) hintergreift die Nachstellnase (26) den überfahrenen Zahn (36) und dreht bei der Rückwärtsbewegung das zahnrad (21) um eine Zahnteilung weiter. Gehäusefeste Anschläge (74) in der Nachbarschaft des Zahnrads (21) können den Schwenkweg des Nachstellhebels (23) beidseits begrenzen.

Wenn in der eingangs erwähnten weise ein vergrößerter Bremsbetätigungshub auftritt, der über das normale Bremsluftspiel und über die Aufnahme eines normalen Verschleißes hinausgeht, würde ohne die Löseeinrichtung (28) die Stellnase (26) beim Entspannen der Bremse das Zahnrad (21) drehen und die Radbremse nachstellen, obwohl kein aufzunehmender Verschleiß vorliegt. Dies würde zu einer dauerhaften Vergrößerung des Spreizwegs und zu einem Anliegen der Bremsbacken (6,7) im normalen Fahrbetrieb an der Bremstrommel (5) führen. Unter Umständen würde die Radbremse (2) blockieren. Ferner wäre es möglich, dass die Rückfahrautomatik (11) nicht wieder in ihre Ausgangsposition zurückkehrt und die Abstützung (10) ihre normale Wirkung nicht mehr einnehmen kann. Dies wird durch die Löseeinrichtung (28) in der vorerwähnten Weise verhindert.

Die Löseeinrichtung (28) besitzt ein Steuerorgan (29), insbesondere ein Huborgan, welches bei Auftreten und in Abhängigkeit von einem vergrößerten Bremsbetätigungshub und einer entsprechend großen Relativbewegung von Stellteil (20) und Nachstellorgan (23) diese Teile (20,23) voneinander distanziert und außer Eingriff bringt. Das Steuerorgan (29) ist dazu an einer Position im Bewegungsbereichs des Nachstellorgans (23) angeordnet, die außerhalb des normalen Stellwegs zur Verschleißkompensation liegt und die Schaltschwelle für das Auftreten eines vergrößerten Bremsbetätigungshubs definiert. Das Ausführungsbeispiel von Figur 1 bis 6 zeigt eine bevorzugte Variante des Steuerorgans (29). Eine Alternative kann gemäß Figur 12 bis 17 der DE 20 2006 002 580 U1 ausgebildet sein.

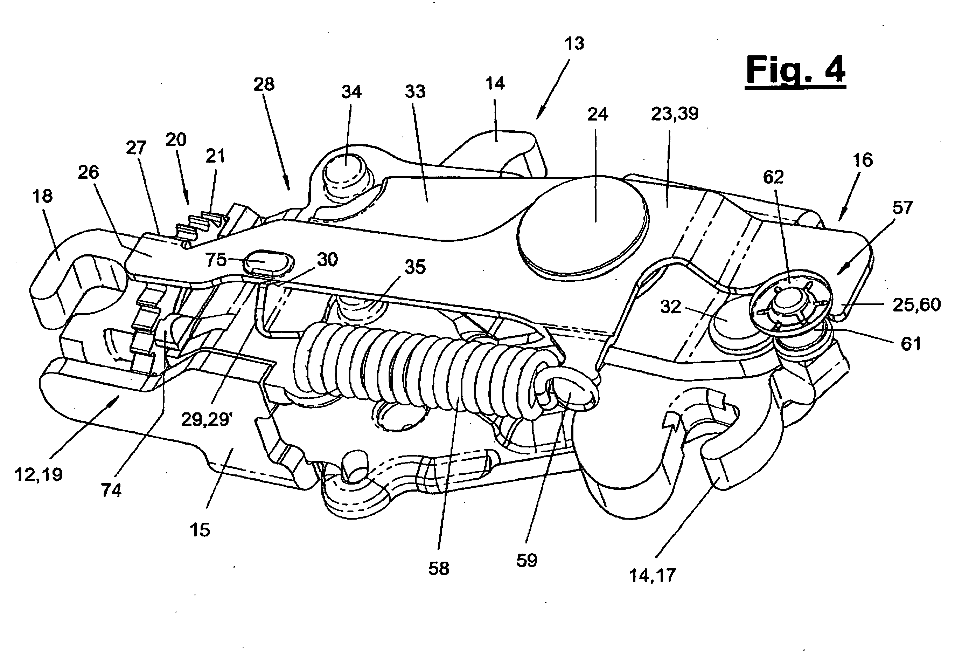

Im gezeigten Ausführungsbeispiel ist das Huborgan (29) als Nocke (29') ausgebildet und in Figur 3 und 4 dargestellt. Sie wirkt auf das Nachstellorgan (23) ein und hebt dieses soweit an, dass der Eingriff zum Stellteil (20) gelöst wird. Die Nocke (29') hat hierfür eine zahnform mit einer schräg ansteigenden Nockenflanke (30) und einer Spitze mit einer rückwärtigen, abfallenden Flanke. Die Nocke (29') wirkt mit einer zur Nocke offenen Ausbuchtung (75) am Hebelarm (39) zusammen und kann hier unter Bildung einer Rastverbindung eintauchen. Der Hebelarm (39) wird beim Aufgleiten auf der Nocke (29') elastisch verformt und angehoben. Die Nockengeometrie und die Lage, Form und Größe der z.B. hutförmigen Ausbuchtung (75) sind so gewählt, dass der Rasteingriff erst bei einem vergrößerten Bremsbetätigungshub eintritt.

Die Nocke (29') kann alternativ wie in der DE 20 2006 002 580 U1 Figur 1 bis 11 ausgebildet sein und eine anschließende abgewinkelte Nockenfläche haben, die als Auflagefläche für das Nachstellorgan (23) dient.

Das Huborgan (29) kann ortsfest am Gehäuse (15) angeordnet sein. In der gezeigten und bevorzugten Ausführungsform ist das Huborgan (29) bzw. die Nocke (29') auf einem Schwenkhebel (33) angeordnet, der zwischen dem Nachstellhebel (23) und der benachbarten Wandung des Gehäuses (15) angeordnet ist. Der Schwenkhebel (33) ist seinerseits drehbar an der Spreizeinrichtung (13) und am Gehäuse (15) gelagert. Vorzugsweise hat er die gleiche Schwenkachse (24) wie der Nachstellhebel (23). Der Schwenkweg des Schwenkhebels (33) ist begrenzt. Hierfür können stationäre Anschläge (34,35) am Gehäuse (15) angeordnet sein. Der aus einem flachen Blechteil gebildete Schwenkhebel (33) kann eine abgewinkelte Form aufweisen und am vorderen Ende einen aufgebogenen Randbereich nebst der hochgebogenen Nocke (29') aufweisen. Der Schwenkweg des Schwenkhebels (33) ist auf die Zahnweite des Zahnrads (21) abgestimmt.

Im normalen Bremsbetrieb können der Schwenkhebel (33) und das Huborgan (29) außer Funktion sein und eine Ruhestellung am unteren Anschlag (35) einnehmen. Der entsprechend der Bremsbetätigung hin und her geschwenkte Nachstellhebel (23) bewegt sich innerhalb des Zahnspiels und dreht bei Verschleiß das Zahnrad (21) ggf. um einen Zahn weiter. Ggf. kann der Nachstellhebel (23) bei dieser Verschleißkompensation auf der schrägen Nockenflanke (30) ein kleines Stück aufgleiten und dadurch leichter über den Zahn (36) gleiten. Der Nachstellhebel (23) hält den Schwenkhebel (33) in der Anschlagposition am unteren Anschlag (35).

Erst bei Auftreten des vergrößerten Bremsbetätigungshubs gleitet der Nachstellhebel (23) auf der entsprechend positionierten schrägen Nockenflanke (30) bis zu deren oberem Ende auf und rastet in der Ausbuchtung (75) mit federnder Spannkraft ein. Durch dieses Anheben des Hebelarms kommt die Vorderkante (27) außer Eingriff mit dem Zahnrad (21).

Beim Lösen des Bremsbetätigungsorgans (3) wird der Nachstellhebel (23) über das Rückstellorgan (58) und ggf. mit Unterstützung durch die inneren Federkräfte der Radbremse (2) und des Spannhebels (14) wieder zurückbewegt, wobei er über den Formschluss zwischen Nocke (29') und Ausbuchtung (75) den Schwenkhebel (33) mitnimmt, bis dieser am oberen Anschlag (34) zur Anlage kommt und stehen bleibt. Erst aus dieser Anschlagstellung heraus bewegt sich der Nachstellhebel (23) über seinen weiteren Schwenkweg relativ zur Nocke (29') und gleitet nach Lösen der Ausbuchtung (75) von der Nocke (29') an dieser wieder entlang nach unten, bis die Vorderkante (27) wieder in Eingriff mit dem Zahnrad (21) tritt. Durch diese Gestaltung wird erreicht, dass die Vorderkante (27) der Stellnase (26) wieder genau in die Ausgangsstellung am zahnrad (21) und in den zahnzwischenraum (37) zurückkehrt ohne das Zahnrad (21) in unerwünschter Weise zu drehen. Durch den Schwenkhebel (33) bleibt der Nachstellhebel (23) im Anfangsbereich der Rückschwenkbewegung genügend lange in angehobener Stellung eingriffsfrei über dem Zahnrad (21) und taucht erst an der gewünschten Position wieder in den Zahneingriff ab. Im normalen Brems- und Nachstellbetrieb drückt der abgesenkte oder an der schrägen Nockenflanke (30) abgleitende Nachstellhebel (23) mit seinem Hebelarm (39) den Schwenkhebel (33) wieder zurück in die Ausgangsposition am unteren Anschlag (35). Die gezeigte Gestaltung des Schwenkhebels (33) und der Nocke (29') sowie der Ausbuchtung (75) haben eigenständige Bedeutung und können mit Vorteil auch bei anderen Nachstell- und Löseeinrichtungen (19,28) sowie Kopplungen mit der Spreizeinrichtung (13), z.B. gemäß der DE 20 2006 002 580 U1 eingesetzt werden.

Die Kraft des ggf. vorgespannten Rückstellorgans (58) wird in der Lösestellung der Radbremse (2) durch den Spannhebel (14) und dessen Anschlagstellung am Gehäuse (15) abgestützt. Der Hebelarm (39) und die Stellnase (26) können dadurch ihre vorgesehene Endstellung am Stellteil (20) nicht überschreiten.

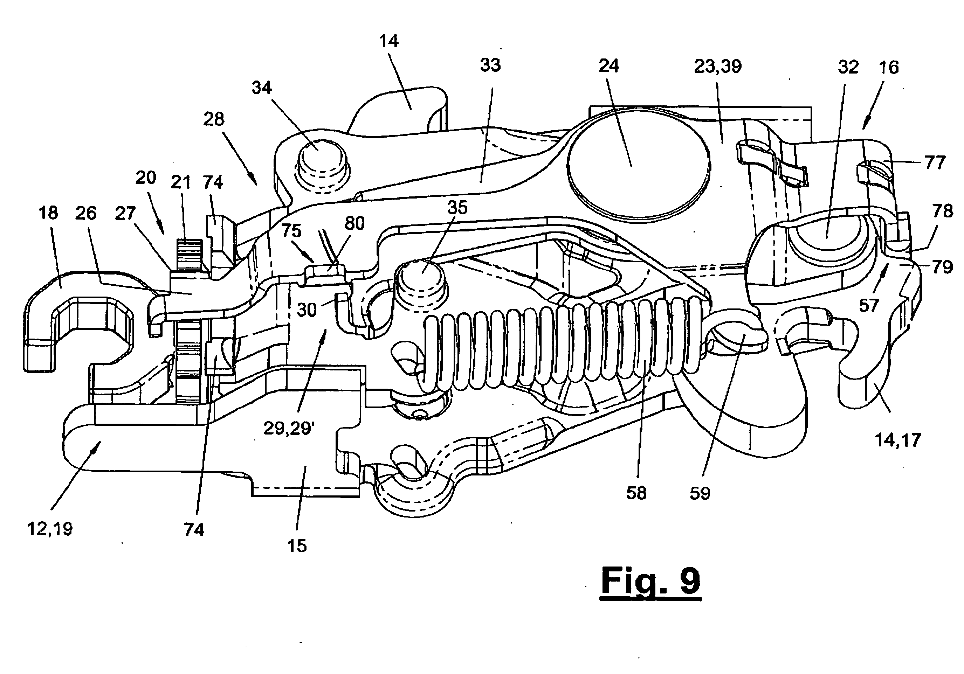

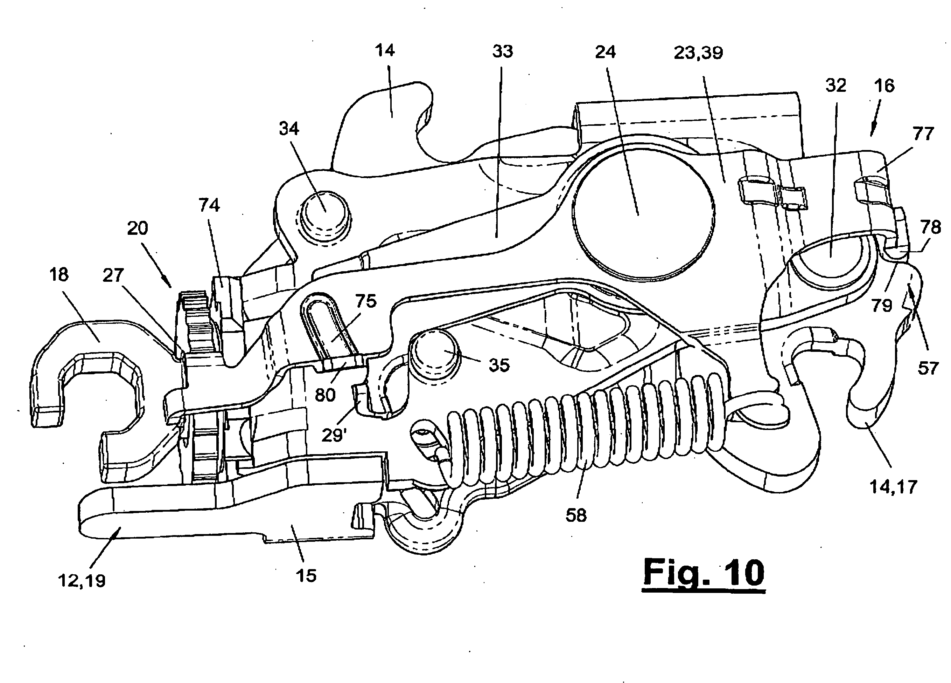

Figur 9 und 10 zeigen eine Variante der Spreizeinrichtung (13) mit der Nachstelleinrichtung (19) und der Löseeinrichtung (28) von Figur 1 bis 5. Die Ausgestaltung dieser Variante stimmt weitgehend mit dem ersten Ausführungsbeispiel von Figur 3 bis 5 überein. Ein Unterschied besteht in der Ausgestaltung der einseitigen Schleppverbindung (57). In der Variante von Figur 9 und 10 ist das hintere Ende (16) des Hebelarms (39) mit einer quer zu seiner Hauptebene gerichteten Abkantung (77) versehen. Diese trägt am unteren Rand eine Angleitrundung (78), die z.B. von einem rundgebogenen Blechstreifen gebildet wird. Die Angleitrundung (78) steht im einseitigen Schleppeingriff mit einer gewölbten Schulter (79) am Spannhebel (14). Wenn der Spannhebel bzw. das Spreizelement (14) betätigt wird und um die Achse (32) dreht, nimmt die Schulter (79) über die Angleitrundung (78) den Nachstellhebel (23) mit. Bei Entlastung kann der Spannhebel (14) unabhängig vom Nachstellhebel (23) in seine Lösestellung zurückkehren.

Eine weitere Abwandlung betrifft die Ausgestaltung des Huborgans (29). Vor der in Figur 9 verdeckten und in Figur 10 sichtbaren Ausbuchtung (75) ist am Hebelrand eine schräge, aufgestellte Angleitnase (80) angeordnet, die mit der Nocke (29') und deren schräger Nockenflanke (30) zusammenwirkt und das dortige Auf- und Abgleiten erleichtert. Der untere Nasenrand geht in die wannenförmige Ausbuchtung (75) über, wobei eine formschlüssige Mitnehmerkante für das Einrasten der Nocke (29') und deren Mitnahme mit dem Schwenkhebel (33) bei der Rückschwenkbewegung entsteht. Die Länge der Ausbuchtung (75) in Schwenkrichtung ist größer als im ersten Ausführungsbeispiel, was für längere Betätigungshübe günstig ist, wie sie z.B. beim Anziehen der Handbremse im Rückmatic-Betrieb auftreten. Die Funktion mit der in Hubstellung auf der Nocke (29') einrastenden und erst nach Kontakt am Anschlag (34) sich lösenden Ausbuchtung (75) sowie der Wiederherstellung des korrekten Verzahnungseingriffs am Stellelement (20) ist ansonsten die gleiche wie im Ausführungsbeispiel von Figur 3 bis 5.

Abwandlungen der vorbeschriebenen Ausführungsformen sind in verschiedener Weise möglich. Ferner können das Nachstellorgan (23) und das Stellteil (20) in beliebiger anderer Weise ausgebildet und an anderer Stelle angeordnet sein sowie eine andere Kinematik haben. Die Nachstellbewegung kann z.B. über eine lineare Ratschenbewegung erfolgen, wobei die Bremsbetätigungskräfte und -bewegungen entsprechend umgelenkt werden und die Löseeinrichtung (28) entsprechend anders ausgebildet ist. Die Nachstelleinrichtung (19) kann z.B. in der Art der Betätigung einer Kartuschenpistole ausgebildet sein, bei der ein Schwenkhebel mittels Schrägstellung und Klemmschluss auf eine durch eine Hebelöffnung durchgesteckte Stange einwirkt. Zum Lösen dieser Klemmverbindung kann die Abstützung des stangenförmigen Elements gelockert werden, so dass die Stange sich in einer Weise zum Hebel ausrichtet, dass die Hebelkräfte nicht übertragen werden und kein. Stangenvorschub erfolgt. Ferner ist es möglich, auf ein gesondertes Nachstellorgan (23) und insbesondere einen Nachstellhebel zu verzichten und statt dessen den Spannhebel (14) als Nachstellorgan zu verwenden.

Die Löseeinrichtung (28) kann eine andere Ausbildung und Kinematik haben. Auch der Eingriff von Nachstellorgan (23) und Stellteil (20) kann auf andere Weise gelöst werden, z.B. durch ein axiales Verschieben des Stellteils (20) gegenüber dem Nachstellorgan (23). Statt des Huborgans (29) kann in diesem Fall ein Schuborgan zum Einsatz kommen. In weiterer Abwandlung ist es möglich, die Funktion und Kinematik der Löseeinrichtung (28) von der Bremsbetätigung und z.B. von den Bewegungen des Spannhebels (14), abzuleiten. Hierfür kann z.B. am Spannhebel (14) eine Auflaufkurve oder dergl. vorhanden sein, mit der bei Auftreten eines übergroßen Bremsbetätigungshubs ein Stift oder ein anderes Stellteil betätigt wird und dadurch auf das Nachstellorgan (23) zum Lösen des Eingriffs mit dem Stellteil (20) einwirkt. Dieser Stellstift kann z.B. den Nachstellhebel (23) in ähnlicher Weise wie das Steuer- oder Huborgan (29) anheben.

Variabel ist auch die Ausgestaltung der anderen Teile der Radbremse (2), insbesondere der Spreizeinrichtung (13), der Bremsbacken (6,7) und der Abstützung (10). Die Erfindung lässt sich auch mit anderen Arten von Ausbildungen, Anlenkungen und Kinematiken von Bremsbacken durchführen, die statt an einer Bremstrommel (5) an einem anderen Bremsorgan angreifen.

Die Erfindung weist in Ergänzung der nachstehenden Ansprüche folgende wesentliche und jeweils einzeln mit Anspruch 1 kombinierbare Merkmale der Radbremse auf:
Das Rückstellorgan (58) ist zwischen dem Nachstellorgan (23) und einem relativ ortsfesten Teil der Radbremse (2) angeordnet.
Die Nachstelleinrichtung (19) ist im Bereich der Spreizeinrichtung (13) angeordnet.
Das Stellteil (20) ist in der montierten Radbremse (2) von außen zugänglich.
Die Schleppnase (60) weist eine schräge Angleitfläche (76) auf.
Der Anschlag (61) ist als quer abstehender Bolzen mit einer Führung (62) für die Schleppnase (60) ausgebildet.
Das Stellteil (20) weist ein Zahnrad (21) mit einem ausfahrbaren Gewindestößel (22) auf.
Das Nachstellorgan (23) weist eine mit dem Zahnrad (21) in Eingriff bringbare Stellnase (26) auf.
Das Steuerorgan (29) ist dem Nachstellorgan (23) zugeordnet.
Das Steuerorgan (29) ist am Gehäuse (15) der Spreizeinrichtung (13) angeordnet.
Das Steuerorgan (29) ist stationär oder auf einem Schwenkhebel (33) beweglich angeordnet.
Die Nocke (29') weist eine schräg ansteigende Nockenflanke (30) und eine anschließende abgewinkelte Nockenfläche (31) zur Auflage des Nachstellorgans (23) auf.
Das Nachstellorgan (23) und der Schwenkhebel (33) sind gleichachsig (24) schwenkbar an der Spreizeinrichtung (13) gelagert.
Der Schwenkweg des Schwenkhebels (33) ist durch Anschläge (34,35) begrenzt.
Der Schwenkweg des Schwenkhebels (33) ist auf die Zahnweite des Zahnrads (21) abgestimmt.

### BEZUGSZEICHENLISTE

- 1: Fahrzeugrad
- 2: Radbremse
- 3: Betätigungsorgan, Seilzug
- 4: Bremsschild
- 5: Bremsorgan, Bremstrommel
- 6: Bremsbacke
- 7: Bremsbacke
- 8: Bremsluft
- 9: Steg
- 10: Abstützung
- 11: Rückfahrautomatik
- 12: Einstellmechanismus
- 13: Spreizeinrichtung, Spannschloss
- 14: Spreizelement, Spannhebel
- 15: Gehäuse
- 16: Hebelende
- 17: Backenaufnahme, Gabel
- 18: Backenaufnahme, Gabel
- 19: Nachstelleinrichtung
- 20: Stellteil
- 21: Zahnrad
- 22: Gewindestößel
- 23: Nachstellorgan, Nachstellhebel
- 24: Schwenkachse
- 25: Mitnehmer
- 26: Stellnase
- 27: Vorderkante
- 28: Löseeinrichtung
- 29: Steuerorgan, Huborgan
- 29': Nocke
- 29": Kulissenführung
- 30: Nockenflanke schräg
- 31: Nockenfläche, Auflagefläche
- 32: Schwenkachse
- 33: Schwenkhebel
- 34: Anschlag vorn
- 35: Anschlag hinten
- 36: Zahn
- 37: Zwischenraum
- 38:
- 39: Hebelarm
- 40:
- 41:
- 42:
- 43:
- 44:
- 45:
- 46:
- 47:
- 48:
- 49:
- 50: Fahrzeug, Fahrzeuganhänger
- 51: Fahrgestell
- 52: Achse
- 53: Zugdeichsel
- 54: Anhängerkupplung
- 55: Auflaufbremseinrichtung
- 56: Handbremseinrichtung
- 57: Mitnahmeverbindung, Schleppverbindung
- 58: Rückstellorgan, Feder
- 59: Ansatz
- 60: Nase, Schleppnase
- 61: Anschlag, Bolzen
- 62: Führung
- 63: Drehrichtung Rückwärtsfahrt
- 64: Drehrichtung Vorwärtsfahrt
- 65: Belagträger
- 66: Stützsteg
- 67: Gleitführung
- 68: Stützelement, Stützbolzen.
- 69: Stützelement, Stützbolzen
- 70: Führungselement, Ausnehmung
- 71: Führungselement, Ausnehmung
- 72: Feder
- 73: Quersteg
- 74: Begrenzer
- 75: Ausbuchtung
- 76: schräge Angleitfläche
- 77: Abkantung
- 78: Angleitelement, Angleitrundung
- 79: Schulter
- 80: Angleitnase

## Patentansprüche

1. Radbremse mit einem Bremsorgan (5), insbesondere einer Bremstrommel, Bremsbacken (6,7), einer Abstützung (10), einer Spreizeinrichtung (13) und einer Rückfahrautomatik (11), welche die Bremswirkung bei Rückwärtsfahrt mindert oder aufhebt, sowie einer Nachstelleinrichtung (19), welche ein Stellteil (20) und ein Nachstellorgan (23) aufweist, die bei der Bremsbetätigung relativ zueinander bewegbar sind, wobei die Nachstelleinrichtung (19) eine Löseeinrichtung (28) aufweist, die bei einem vergrößerten Bremsbetätigungshub den Eingriff von Stellteil (20) und Nachstellorgan (23) löst, **dadurch gekennzeichnet, dass** die Nachstelleinrichtung (19) und die Spreizeinrichtung (13) durch eine einseitig wirksame Mitnahmeverbindung (57) gekoppelt sind.

2. Radbremse nach Anspruch 1, **dadurch gekennzeichnet, dass** die Spreizeinrichtung (13) und die Bremsbacken (6,7) beim Lösen der Radbremse (2) unabhängig von der Nachstelleinrichtung (19) bewegbar sind.

3. Radbremse nach Anspruch 1 oder 2, **dadurch gekennzeichnet, dass** das Nachstellorgan (23) mit einem gegen die Spreizeinrichtung (13) wirkenden Rückstellorgan (58), insbesondere einer Feder, verbunden ist.

4. Radbremse nach Anspruch 1, 2 oder 3, **dadurch gekennzeichnet, dass** das Nachstellorgan (23) als schwenkbarer (24) Nachstellhebel ausgebildet ist.

5. Radbremse nach einem der vorhergehenden Ansprüche, **dadurch gekennzeichnet, dass** das Nachstellorgan (23) mit einem Spreizelement (14), insbesondere einem Spannhebel, über die Mitnahmeverbindung (57) gekoppelt ist.

6. Radbremse nach einem der vorhergehenden Ansprüche, **dadurch gekennzeichnet, dass** der Nachstellhebel (23) einen Schwenkarm (39) aufweist, der am rückwärtigen Hebelende (16) eine Schleppnase (60) aufweist, die mit einem Anschlag (61) am Spreizelement (14) zur Bildung der Mitnahmeverbindung (57) zusammenwirkt.

7. Radbremse nach einem der Ansprüche 1 bis 5, **dadurch gekennzeichnet, dass** der Nachstellhebel (23) einen Schwenkarm (39) aufweist, der am rückwärtigen Hebelende (16) ein Angleitelement (78) aufweist, das mit einer Angleitschulter (79) am Spreizelement (14) zusammenwirkt.

8. Radbremse nach Anspruch 7, **dadurch gekennzeichnet, dass** der Nachstellhebel (23) am Hebelende (16) eine Abkantung (77) mit einem als Angleitrundung ausgebildeten Angleitelement (78) aufweist.

9. Radbremse nach einem der vorhergehenden Ansprüche, **dadurch gekennzeichnet, dass** die Bremsbacken (6,7) als Schwenkbacken ausgebildet sind oder eine Bremsbacke (7) als Schwenkbacke und die andere Bremsbacke (6) als Schiebebacke ausgebildet sind.

10. Radbremse nach einem der vorhergehenden Ansprüche, **dadurch gekennzeichnet, dass** die Löseeinrichtung (28) ein Steuerorgan (29) aufweist, welches bei der Relativbewegung von Stellteil (20) und Nachstellorgan (23) die Teile (20,23) distanziert.

11. Radbremse nach einem der vorhergehenden Ansprüche, **dadurch gekennzeichnet, dass** das Steuerorgan (29) als Nocke (29') oder als Kulissenführung ausgebildet ist.

12. Radbremse nach einem der vorhergehenden Ansprüche, **dadurch gekennzeichnet, dass** der Nachstellhebel (23) einen biegeelastischen oder einen mittels Gelenk klappbaren Hebelarm (39) aufweist.

13. Radbremse nach einem der vorhergehenden Ansprüche, **dadurch gekennzeichnet, dass** der Nachstellhebel (23) eine schräge Angleitnase (80) oder eine Ausbuchtung (75) zur rastenden Aufnahme des Steuerorgans (29) bei einem vergrößerten Bremsbetätigungshub aufweist.

14. Radbremse nach einem der vorhergehenden Ansprüche, **dadurch gekennzeichnet, dass** das Nachstellorgan (23), das Spreizelement (14) und das Rückstellorgan (58) an einem Gehäuse (15) der schwimmenden Spreizeinrichtung (13) angeordnet sind.

## Claims

1. Wheel brake having a brake element (5), in particular a brake drum, brake shoes (6, 7), a support (10), a spreading device (13) and an automatic reversing system (11) which reduces or cancels the braking action during driving in reverse, and an adjusting device (19) which has an actuating part (20) and an adjusting element (23) which can be moved relative to one another during the brake actuation, the adjusting device (19) having a release device (28) which, in the case of an enlarged brake actuation stroke, releases the engagement of the actuating part (20) and the adjusting element (23), **characterized in that** the adjusting device (19) and the spreading device (13) are coupled by a driving connection (57) which is active on one side.

2. Wheel brake according to Claim 1, **characterized in that** the spreading device (13) and the brake shoes (6, 7) can be moved independently of the adjusting device (19) during release of the wheel brake (2).

3. Wheel brake according to Claim 1 or 2, **characterized in that** the adjusting element (23) is connected to a restoring element (58), in particular a spring, which acts counter to the spreading device (13).

4. Wheel brake according to Claim 1, 2 or 3, **characterized in that** the adjusting element (23) is configured as a pivotable (24) adjusting lever.

5. Wheel brake according to one of the preceding claims, **characterized in that** the adjusting element (23) is connected via the driving connection (57) to a spreading element (14), in particular a tensioning lever.

6. Wheel brake according to one of the preceding claims, **characterized in that** the adjusting lever (23) has a pivoting arm (39) which, at the rear lever end (16), has a drag lug (60) which interacts with a stop (61) on the spreading element (14) in order to form the driving connection (57).

7. Wheel brake according to one of Claims 1 to 5, **characterized in that** the adjusting lever (23) has a pivoting arm (39) which, at the rear lever end (16), has a sliding element (78) which interacts with a sliding shoulder (79) on the spreading element (14).

8. Wheel brake according to Claim 7, **characterized in that**, at the lever end (16), the adjusting lever (23) has an angled-over edge (77) with a sliding element (78) which is configured as a sliding rounded portion.

9. Wheel brake according to one of the preceding claims, **characterized in that** the brake shoes (6, 7) are configured as pivoting shoes, or one brake shoe (7) is configured as a pivoting shoe and the other brake shoe (6) is configured as a sliding shoe.

10. Wheel brake according to one of the preceding claims, **characterized in that** the release device (28) has a control element (29) which, during the relative movement of the actuating part (20) and the adjusting element (23), keeps the parts (20, 23) apart.

11. Wheel brake according to one of the preceding claims, **characterized in that** the control element (29) is configured as a cam (29') or as a slotted guide.

12. Wheel brake according to one of the preceding claims, **characterized in that** the adjusting lever (23) has a flexurally elastic lever arm (39) or has a lever arm (39) which can be folded by means of a joint.

13. Wheel brake according to one of the preceding claims, **characterized in that** the adjusting lever (23) has an oblique sliding lug (80) or a bulge (75) for receiving the control element (29) in a latching manner in the case of an enlarged brake actuation stroke.

14. Wheel brake according to one of the preceding claims, **characterized in that** the adjusting element (23), the spreading element (14) and the restoring element (58) are arranged on a housing (15) of the floating spreading device (13).

## Revendications

1. Frein de roue comprenant un organe de frein (5), notamment un tambour de frein, des mâchoires de frein (6, 7), un support (10), un dispositif d'écartement (13) et un automatisme de rappel (11) qui réduit ou supprime l'effet de freinage lors d'une conduite en marche arrière, ainsi qu'un dispositif de rattrapage (19), qui présente une partie de réglage (20) et un organe de rattrapage (23), qui peuvent être déplacés l'un par rapport à l'autre lors de l'actionnement du frein, le dispositif de rattrapage (19) présentant un dispositif de desserrage (28) qui, lors d'une course d'actionnement du frein accrue, libère l'engagement de la partie de réglage (20) et de l'organe de rattrapage (23), **caractérisé en ce que** le dispositif de rattrapage (19) et le dispositif d'écartement (13) sont accouplés par une liaison d'entraînement (57) agissant d'un côté.

2. Frein de roue selon la revendication 1, **caractérisé en ce que** le dispositif d'écartement (13) et les mâchoires de frein (6, 7) peuvent être déplacés indépendamment du dispositif de rattrapage (19) lors du desserrage du frein de roue (2).

3. Frein de roue selon la revendication 1 ou 2, **caractérisé en ce que** l'organe de rattrapage (23) est connecté à un organe de rappel (58) agissant à l'encontre du dispositif d'écartement (13), notamment un ressort.

4. Frein de roue selon la revendication 1, 2 ou 3, **caractérisé en ce que** l'organe de rattrapage (23) est réalisé sous forme de levier de rattrapage pivotant (24).

5. Frein de roue selon l'une quelconque des revendications précédentes, **caractérisé en ce que** l'organe de rattrapage (23) est accouplé à un élément d'écartement (14), en particulier un levier de serrage, par le biais de la liaison d'entraînement (57).

6. Frein de roue selon l'une quelconque des revendications précédentes, **caractérisé en ce que** le levier de rattrapage (23) présente un bras pivotant (39), qui présente un nez entraîné (60) sur l'extrémité arrière du levier (16), lequel coopère avec une butée (61) sur l'élément d'écartement (14) pour former la liaison d'entraînement (57).

7. Frein de roue selon l'une quelconque des revendications 1 à 5, **caractérisé en ce que** le levier de rattrapage (23) présente un bras pivotant (39), qui présente un élément de glissement (78) sur l'extrémité arrière du levier (16), lequel coopère avec un épaulement de glissement (79) sur l'élément d'écartement (14).

8. Frein de roue selon la revendication 7, **caractérisé en ce que** le levier de rattrapage (23) présente à l'extrémité du levier (16) un rebord (77) avec un élément de glissement (78) réalisé sous forme d'arrondi de glissement.

9. Frein de roue selon l'une quelconque des revendications précédentes, **caractérisé en ce que** les mâchoires de frein (6, 7) sont réalisées sous forme de mâchoires pivotantes ou une mâchoire de frein (7) est réalisée sous forme de mâchoire pivotante et l'autre mâchoire de frein (6) est réalisée sous forme de mâchoire coulissante.

10. Frein de roue selon l'une quelconque des revendications précédentes, **caractérisé en ce que** le dispositif de desserrage (28) présente un organe de commande (29), qui, lors du mouvement relatif de la partie de réglage (20) et de l'organe de rattrapage (23), écarte les parties (20, 23).

11. Frein de roue selon l'une quelconque des revendications précédentes, **caractérisé en ce que** l'organe de commande (29) est réalisé sous forme de came (29') ou sous forme de guide à coulisse.

12. Frein de roue selon l'une quelconque des revendications précédentes, **caractérisé en ce que** le levier de rattrapage (23) présente un bras de levier (39) élastique en flexion ou rabattable au moyen d'une articulation.

13. Frein de roue selon l'une quelconque des revendications précédentes, **caractérisé en ce que** le levier de rattrapage (23) présente un nez de glissement oblique (80) ou un renflement (75) par rapport au logement d'encliquetage de l'organe de commande (29) dans le cas d'une course d'actionnement du frein accrue.

14. Frein de roue selon l'une quelconque des revendications précédentes, **caractérisé en ce que** l'organe de rattrapage (23), l'élément d'écartement (14) et l'organe de rappel (58) sont disposés sur un boîtier (15) du dispositif d'écartement flottant (13).
